# EUROPEAN PATENT APPLICATION

(11) **EP 4 564 083 A1**
(43) Date of publication of application: **04.06.2025**
(21) Application number: 24160366.1
(22) Date of filing: 28.02.2024
(51) Int. Cl.: G02C 11/06, G06F 1/16, G02B 27/01, G02C 11/00, H01R 13/62

(54) **SPLIT SMART GLASSES FOR HUMAN-COMPUTER INTERACTION**

(30) Priority: 01.12.2023 CN 202311634975
(71) Applicant: Xiao, Han, Fuzhou Fujian 350001 (CN)
(72) Inventor: XIAO, Han, Fuzhou Fujian 350001 (CN); ZUO, Yuying, Fuzhou Fujian 350001 (CN); CHEN, Houyi, Fuzhou Fujian 350001 (CN); XIAO, Xiaosong, Fuzhou Fujian 350001 (CN)
(74) Representative: Cabinet Chaillot

(57) **Abstract**

Disclosed is a split smart glasses for human-computer interaction; the smart glasses body is provided with bone conduction microphones for voice human-computer interaction and air conduction earphone microphones; the bone conduction microphones only picks up the whispered sound information emitted by the user's exhaled airflow rubbing the respiratory tract when the user's throat vocal cords are in a vibration-free state; a glasses hanging cord is provided between two glasses temples of the smart glasses body that connects them, and the glasses hanging cord is provided with an upper transmission line in hidden; the upper transmission line is led out from the middle section of the glasses hanging cord to be connected to the automatic magnetic connection device; the wearable part is connected to the automatic magnetic connection device through a lower transmission line. The invention adopts the human-computer interaction method of whispering into the smart glasses.

## Description

### 1. Technical Field

The invention relates to the technical field of smart glasses, and specifically refers to a split smart glasses for human-computer interaction.

### 2. Background Art

As we all know, the human-computer interaction of the keyboard and mouse window of PC computers and the touch screen of smartphones are key shortcomings in the replacement and innovation of two major computing platforms. Nowadays, the two major computing platforms of PC, computer and smartphone have reached the ceiling of innovation, and a new next-generation mobile wearable computing platform that is stronger than the two is about to emerge. Similarly, smart glasses are also a key shortcoming technology that achieves the human-computer interaction output display of mobile wearable computing platforms. Existing technology has been able to superimpose the same back opaque image display technology used for mobile human-computer interaction on PCs and smartphones in the environmental field of view of smart glasses. However, there are still two disadvantages: short battery life of mobile human-computer interaction and no fine input on mobile keyboard.

Disadvantage 1: among the two types of smart glasses with human-computer interaction output display, all-in-one and split models on the market today, the biggest problem with the all-in-one machine that includes a battery and computing unit is that the weight of the whole machine is too heavy and the battery life is too short, which is not suitable to be worn on the head for a long time and used indoors and outdoors at any time. The split machine separates the battery and host part from the main body of the glasses. Although the weight of the glasses is reduced and the battery life is increased, however, the thick power and data transmission line of about 6 mm causes trouble for users to unplug the connection every time they use it: the up and down, left and right movements of the head are interfered by the drag of the transmission line, which is inconvenient to wear and operate, and people are reluctant to use it. People are looking forward to the emergence of smart glasses that are as easy to put on and use as all-in-one smart glasses, but are lighter and do not require connecting wires and can meet the needs of long-lasting output and display. However, this problem of battery life for human-computer interaction in smart glasses is basically unsolvable until the advent of new wearable batteries with high specific energy.

For example: in the Chinese patent CN 216119548 U, a relatively thick data cable from a smartphone (5) is used to connect the smart glasses to transmit audio and video data and provide battery life; the connection is troublesome and the use is interfered by the data cable.

Another example: in the Chinese patent CN 209311821 U, the battery (22) is located on the temples of smart glasses; in order to reduce the weight added to the ears and bridge of the nose, the battery capacity is limited and there is a disadvantage of battery life.

Disadvantage 2: in addition, in order to become a mass consumer product for human-computer interaction output display smart glasses, it must have the information resources of PC computers and smartphones commonly used by people. Since there is no supporting human-computer interaction input technology for wearable keyboards that can be precisely controlled so far, natural voice input, which is more sophisticated and convenient than gesture human-computer interaction, is regarded as the key technology for human-computer interaction in the future of smart glasses; however, voice interaction technology still has major shortcomings that cannot be used normally in many scenarios, especially in noisy environments such as markets, parties, large construction sites, etc.; it is difficult to input and receive speech clearly, and it is also tiring to input loud voice for a long time; using normal voice input in public places such as offices, theaters, and conferences will disturb others; in situations where there are others around you and you need to talk privately, it is difficult to implement normal voice human-computer interaction, so you have to choose another place. The existing independent earbuds and over-the-ear headsets have poor battery life and are often troublesome to remove, charge and wear. Most of the smart glasses are integrated with speakers and microphones, and the privacy of calls is also poor.

The existing technology to solve this kind of problem is to use the popular independent headset on the market plus the whisper pickup technology of bone conduction microphone, plus the software on the terminal device that can whisper pickup for typing, or pick up and change the voice. Currently, better software of this kind (such as iFlytek and Sogou) has been available, however, there are currently very few individual headset hardware capable of whispering human-computer interaction input and output, and there are even fewer headset devices for whispering human-computer interaction input and output in the overall smart glasses hardware. Various individual headsets can each solve some of the above problems, but there are no smart glasses that can fully adapt to various situations and have full-featured headset sound human-computer interaction.

For example: Chinese patent application number CN2020107401291 discloses a kind of smart glasses. The smart glasses is equipped with a bone conduction microphone and an air conduction microphone; the purpose is only to distinguish the different voices of each person in a multi-person environment meeting to identify their respective identities. It does not use bone conduction microphones to receive whispers to solve the above-mentioned problems in voice human-computer interaction.

Another example: Chinese patent application number CN2019213544204 discloses a kind of smart glasses. The sensor in the glasses is used to collect vibration signals of teeth tapping and rubbing against each other through bone conduction, and input instructions to control the computer for human-computer interaction. A device that could easily and accurately input human-computer interaction commands directly by whispering voice has become an input device that is rough and difficult to learn.

Another example: Chinese patent application number 202121616437X discloses a smart wearable device. This invention is only used to solve the problem of using bone conduction microphones to pick up sound, reduce noise and improve sound quality in human-computer interaction. It does not consider using whispers to achieve the purpose of private interaction and long-term talking without getting tired.

Therefore, how to provide a split smart glasses for human-computer interaction has become an urgent problem that needs to be solved.

### 3. Summary of the Invention

The purpose of the invention is to provide a voiceless whisper input function for today's split smart glasses, and also to use a device for automatically connecting the battery or/and data cable in the air, at the same time, it achieves the purpose of making the power and data transmission line connected to the glasses end thinner, eliminating the interference of the user's head movement up, down, left and right being dragged by the transmission line, being simpler and more convenient to put on and take off than one-piece and split-type glasses, and the battery can meet the purpose of long-lasting work all day long.

The invention also requires that when adding a whisper input method, the integrated structure of the piston headset and the main body of the glasses is also used to replace the speaker microphone or ear-mounted wireless headset of the integrated structure of the current smart glasses, so as to achieve the purpose of eliminating the trouble of using a separate headset frequently to put on and charge and battery life, as well as the trouble of using an integrated speaker with glasses that has poor privacy and interferes with others.

In order to achieve the above object, the technical solutions provided by the invention are: a split smart glasses for human-computer interaction, comprising a smart glasses body that can superimpose video image display output in the real field of view of the glasses, a wearable part containing a battery, and an automatic magnetic connection device that automatically connects the smart glasses body with the power supply of the wearable part and/or the transmission line of the wearable computer host data;
the smart glasses body is provided with bone conduction microphones for voice human-computer interaction and air conduction earphone microphones; the bone conduction microphones only picks up the whispered sound information emitted by the user's exhaled airflow rubbing the respiratory tract when the user's throat vocal cords are in a vibration-free state;
a glasses hanging cord is provided between two glasses temples of the smart glasses body that connects them, and the glasses hanging cord is provided with an upper transmission line in hidden; the upper transmission line is led out from the middle section of the glasses hanging cord to be connected to the automatic magnetic connection device; the wearable part is connected to the automatic magnetic connection device through a lower transmission line.

Further, the bone conduction microphones are fixed in nose pads of the smart glasses body; the glasses temple of the smart glasses body is provided with an electronic control unit with a microprocessor; the bone conduction microphones collect the amplitude-modulated audio electrical signal generated by the sound vibration of the nasal bones, and then communicatively couples it to the electronic control unit.

Further, the air conduction earphone microphones are piston type and arranged next to the user's ear behind the two glasses temples of the smart glasses body, and are hung in the ear facing the user's ear vortex; the air conduction earphone microphone is provided with a two-to-one switch for selecting one of bone conduction and air conduction microphone touch sensing, and handle thereof is movably connected to the smart glasses body.

Further, the automatic magnetic connection device comprises an upper magnetic connector and a lower magnetic connector; the upper magnetic connector is connected to the glasses hanging cord through the upper transmission line, and the lower transmission line extends to the back of the user's neck to connect to the lower magnetic connector.

Further, the lower magnetic connector is provided with a guide block; the guide block keeps the lower magnetic connector facing upward, and at the same time, the upper magnetic head is automatically attracted and guided by the lower magnetic connector until they are correctly aligned and attracted to each other.

Further, the lower magnetic connector is also provided with a fixing piece; the fixing piece fixes the lower magnetic connector on the user's collar or clothing at the nape of the neck; the fixing piece is an elastic clip or Velcro.

Compared with the prior art, the advantages of the invention are: the invention designs a device for automatically connecting batteries and data lines in the air for split smart glasses with mobile human-computer interaction display, at the same time, it achieves the purpose of making the power and data transmission line connected to the glasses end thinner, eliminating the interference of the user's head movement up, down, left and right being dragged by the transmission line, being simpler and more convenient to put on and take off than one-piece and split-type glasses, and the battery can meet the purpose of long-lasting work all day long.

The mobile human-computer interaction of the split smart glasses of the invention adopts the human-computer interaction method of whispering into the smart glasses. The headset and the main body of the glasses can adopt an integrated structure to avoid the trouble of using an independent headset for frequent wearing and recharging, and the use of integrated speakers has poor privacy and interferes with the trouble of disturbing others.

### 4. Brief Description of Accompany Drawings

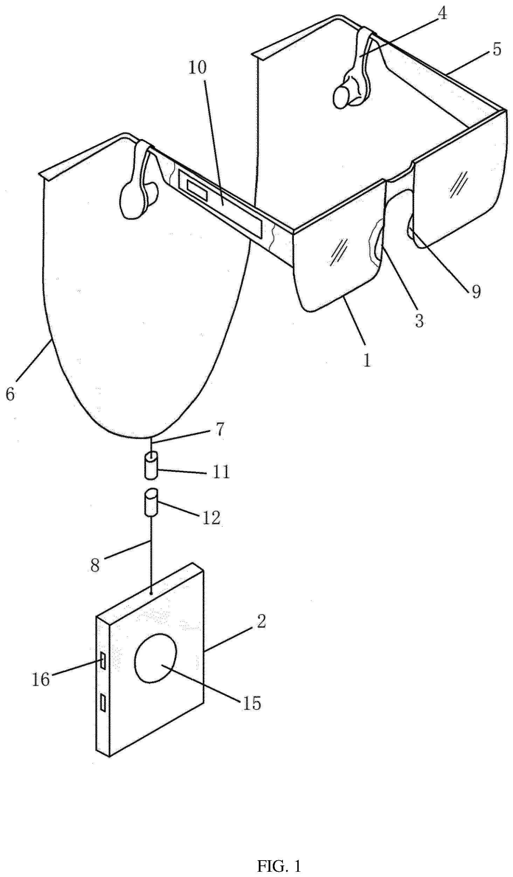

FIG. 1 is a schematic structural diagram of the split smart glasses for human-computer interaction according to the invention.

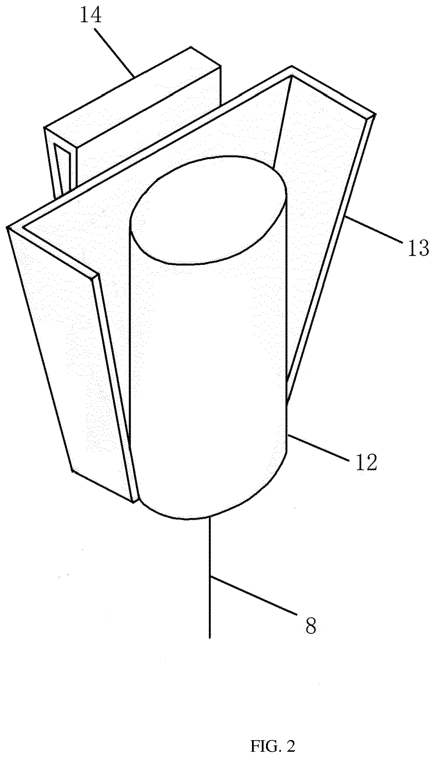

FIG. 2 is a schematic structural diagram of the lower magnetic connector, guide block, and fixing piece according to the invention.
FIG. 3 is an electrical control principle block diagram according to the embodiment.

As shown in the FIGS, 1 refers to the smart glasses body; 2 refers to the wearable part; 3 refers to the bone conduction microphone; 4 refers to the air conduction earphone microphone; 5 refers to the glasses temple; 6 refers to the glasses hanging cord; 7 refers to the upper transmission line; 8 refers to the lower transmission line; 9 refers to the nose pad; 10 refers to the electronic control unit; 11 refers to the upper magnetic connector; 12 refers to the lower magnetic connector; 13 refers to the guide block; 14 refers to the fixing piece; 15 refers to the magnetic charging transmitting coil; 16 refers to the socket.

### 5. Specific Embodiment of the Invention

The split smart glasses for human-computer interaction according to the invention will be further described in detail hereinafter with reference to the drawings.

The specific implementation process of the split smart glasses for human-computer interaction according to the invention is as follows:
a split smart glasses for human-computer interaction, comprising a smart glasses body 1 that can superimpose video image display output in the real field of view of the glasses, a wearable part 2 containing a battery, and an automatic magnetic connection device that automatically connects the smart glasses body 1 with the power supply of the wearable part 2 and/or the transmission line of the wearable computer host data;
the automatic magnetic connection device comprises an upper magnetic connector 11 and a lower magnetic connector 12; the upper magnetic connector 11 is connected to the glasses hanging cord 6 through the upper transmission line 7, and the lower transmission line 8 extends to the back of the user's neck to connect to the lower magnetic connector 12. A glasses hanging cord 6 is provided between two glasses temples 5 of the smart glasses body 1, and the glasses hanging cord 6 is provided with an upper transmission line 7 in hidden connected to the power and/or data of the smart glasses body 1; the upper transmission line 7 can be introduced into the hanging cord from one side of the glasses temple 5 in a single bundle or divided into two bundles and introduced into the hanging cord from both glasses temples 5, led out from the middle section of the glasses hanging cord 6 and connected to the upper magnetic connector 11; the upper transmission line 7 is divided into two bundles and introduced from the two glasses temples 5 into the glasses hanging cord 6, which will make the glasses hanging cord 6 more slender and soft; the wearable part 2 is connected to the automatic magnetic connection device through a lower transmission line 8.

When the user hangs the smart glasses body 1 connected with the glasses hanging cord 6 on both ears and the bridge of the nose from the head down, the upper magnetic connector 11 and the lower magnetic connector 12 on the wearable part 2 are automatically connected together, and at the same time, the upper transmission line 7 and the lower transmission line 8 of the power and/or data of the two are automatically connected, to form an automatic magnetic connection device between the smart glasses body 1 and the wearable part 2. The automatic magnetic connection device allows the smart glasses body 1 to have only a thin and short glasses hanging cord 6 connecting the two glasses temples 5 on the rear legs, and is lighter than the one-piece smart glasses; it can also automatically complete the automatic connection with the lower transmission line 8 of the wearable part 2 using a wearing action that is simpler than the current one-piece smart glasses. Since the length of the glasses hanging cord 6 including the upper magnetic connector 11 is longer than the distance from the two glasses temples 5 to the lower magnetic connector 12 and leaves enough margin, after the connection is completed, most of the weight of the glasses hanging cord 6 is taken up by the lower magnetic connector 12, and the head moves forward, backward, left and right without any pulling feeling, which enables the wearable smart glasses to ensure the battery life of human-computer interaction with a better feel than existing one-piece and split models.

The smart glasses body 1 is provided with bone conduction microphones 3 for voice human-computer interaction and air conduction earphone microphones 4; the bone conduction microphones 3 only picks up the whispered sound information emitted by the user's exhaled airflow rubbing the respiratory tract when the user's throat vocal cords are in a vibration-free state, to implement a special whispering sound human-computer interaction.

In one embodiment of the invention, the lower magnetic connector 12 is provided with a guide block 13; the guide block 13 keeps the lower magnetic connector 12 facing upward, and at the same time, the upper magnetic head is automatically attracted and guided by the lower magnetic connector 12 until they are correctly aligned and attracted to each other. The lower magnetic connector 12 is also provided with a fixing piece 14; the fixing piece 14 fixes the lower magnetic connector 12 on the user's collar or clothing at the nape of the neck; the fixing piece 14 is an elastic clip or Velcro.

In one embodiment of the invention, the bone conduction microphones 3 are fixed in nose pads 9 of the smart glasses body 1, and the sensor provided in the bone conduction microphone 3 may be one of the piezoelectric ceramic vibration sensors or/and the gyroscope acceleration vibration sensor; the glasses temple 5 is provided with an electronic control unit 10 with a microprocessor; when the user touches the sensing two-to-one switch to the bone conduction microphone 3 position, the bone conduction microphone 3 collects the amplitude-modulated audio electrical signal generated by the sound vibration of the nasal bones caused by whispering, and then communicatively couples it to the microprocessor on the electronic control unit 10

Since the transmission speed of sound in solids is faster than the transmission speed in air, and the loss of sound is smaller, the vibration of the silent vocal cords depends only on the airflow friction of the respiratory tract, which produces whispering sounds, and it can be efficiently conducted through the nasal bones to the bone conduction microphone 3 on the nose pad 9 of the glasses, and then the amplitude-modulated audio electrical signal generated by the vibration is then communicatively coupled to the microprocessor on the electronic control unit 10, so that whispering sounds can be clearly transmitted in a noisy environment, or the control and communication human-computer interaction of wearable computer devices in a quiet environment can be completed without affecting the confidentiality of others.

When the user touches the sensing two-to-one switch and sets it to the air conduction microphone position, and speaks with a normal sound or a louder than normal sound of the vocal cord vibration, the bone conduction microphone 3 will stop working, and the microprocessor will convert it into the normal sound sent by the microphone of the receiving headset or the picked-up electrical signal that is louder than normal speaking.

In one embodiment of the invention, an air conduction earphone microphone 4 with a handle is connected and fixed to the back of the two glasses temples 5 at the position next to the user's ear, so that it is suspended in the ear facing the user's ear vortex; the handle is provided with a touch sensor switch for selecting one of the air conduction earphone microphone 4 and the bone conduction microphone 3, and the handle of the air conduction earphone microphone 4 is in displaceable connection to the smart glasses body 1, such as the deformation and displacement device of plastic material, or the rotation and displacement device of the rotating friction pair between the temples and the handle hole. When the user wants to isolate or monitor ambient sounds, the user can press or pull apart the air conduction earphone microphone 4 accordingly with fingers, so that the piston of the piston-type air conduction earphone microphone 4 can isolate or release ambient sounds. When the user needs to whisper in a private conversation or voice speech typing, the user can press the air conduction earphone microphone 4 into the ear with fingers, and at the same time touch the sensor switch on the headset to turn off the air conduction earphone microphone 4, and select the bone conduction microphone 3 to receive the user's whisper sound.

One or more bone conduction microphones 3 are provided on the nose pad 9, which are only used to receive the whisper voice data when the user speaks; when receiving a whisper, the user can press the handle of the air conduction earphone microphone 4 to plug the ear canal to avoid external sound interference; the user can also pull out the air conduction earphone microphone 4 and move it to a suspended position slightly away from the ear canal, without contact with the inner and outer surfaces of the ear, which allows the user to hear private information confidentially and hear external sounds without the uncomfortable feeling of plug-in and ear-hook earphones.

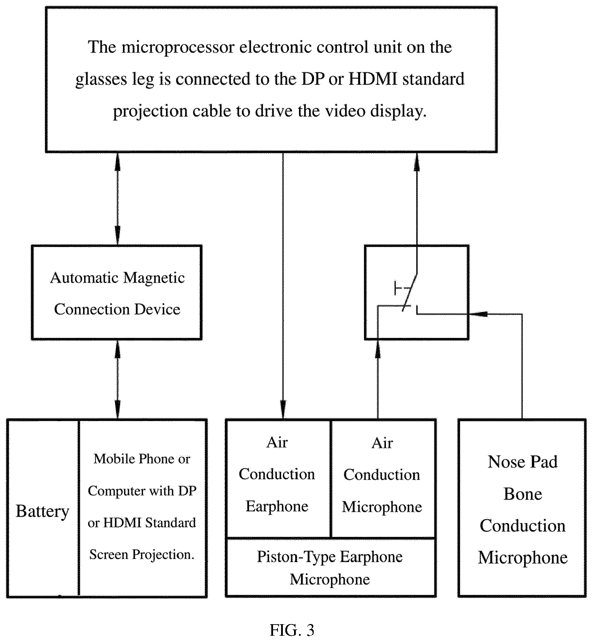

In one embodiment of the invention, a commercially available MADE GAZE brand Glow Plus model of AR augmented reality finished smart glasses that supports receiving DP standard wired screen projection is selected; a speaker part and a microphone part are integrally provided on the glasses body temples, and are respectively connected to the microprocessor electronic control unit 10 on the glasses temples; at the same time, a pair of ordinary piston-type earphone microphone components that can be inserted into the ears are also installed and connected to the glasses body temples, and a bone conduction microphone 3 in BM-06 model of Ningbo Shuozheng Electronic Technology Co., Ltd, with a diameter of 8 mm and a height of 3.5 mm is also selected; the components are hidden in the modified nose pads 9 of the glasses; the earphone part of the piston-type earphone microphone component directly replaces the speaker component on the finished glasses temples 5 and is communicatively connected to the microprocessor electronic control unit 10; Among them, the microphone part of the piston headphone microphone component and the bone conduction microphone 3 component of the BM-06 model are selected through a touch-sensitive two-to-one switch to replace the microphone component on the finished glasses temples 5 to be connected to the microprocessor electronic control unit 10. In addition, in this embodiment, a Samsung brand S20 smartphone that supports DP standard connected screen projection is selected as the wearable computer host of the wearable division 2, which is adsorbed on the battery and used while charging; a male head of the DP standard magnetic adapter commercially available from Yishi Technology is selected and is used as the lower magnetic connector 12 to connect to the S20 smartphone host through a data cable, and a female head of the magnetic adapter is used as an upper magnetic connector 11 to connect to the Glow Plus smartphone host through a data cable; the above components constitute the split smart glasses for human-computer interaction with an automatic magnetic connection device according to the invention (refer to the electrical control principle block diagram of the embodiment in FIG. 3).

In one embodiment of the invention, the wearable part 2 can be disposed on the user's back and neck, or on both shoulders, or in the pocket of the user's pants, or on one of a halter, necklace, scarf, or tie, or on a belt, a bra, a shoulder bag, a vest, clothes, or clothing items;

Specifically, the wearable part 2 is a wearable computer host split part containing a battery or an external battery split part after the wearable computer host is separated.

In one embodiment of the invention, the outer surface of the wearable part 2 is provided with a magnetic charging transmitting coil 15 for wireless charging of the wearable computer host or other devices and sockets 16 for charging itself or other devices.

The invention and the embodiments thereof are described hereinabove, and this description is not restrictive. What is shown in the drawings is only one of the embodiments of the invention, and the actual structure is not limited thereto. All in all, structural methods and embodiments similar to the technical solution without deviating from the purpose of the invention made by those of ordinary skill in the art without creative design shall all fall within the protection scope of the invention.

## Claims

1. A split smart glasses for human-computer interaction, comprising a smart glasses body (1) that can superimpose video image display output in the real field of view of the glasses, a wearable part (2) containing a battery, and an automatic magnetic connection device that automatically connects the smart glasses body (1) with the power supply of the wearable part (2) and/or the transmission line of the wearable computer host data;
the smart glasses body (1) is provided with bone conduction microphones (3) for voice human-computer interaction and air conduction earphone microphones (4); the bone conduction microphones (3) only picks up the whispered sound information emitted by the user's exhaled airflow rubbing the respiratory tract when the user's throat vocal cords are in a vibration-free state;
a glasses hanging cord (6) is provided between two glasses temples (5) of the smart glasses body (1) that connects them, and the glasses hanging cord (6) is provided with an upper transmission line (7) in hidden; the upper transmission line (7) is led out from the middle section of the glasses hanging cord (6) to be connected to the automatic magnetic connection device; the wearable part (2) is connected to the automatic magnetic connection device through a lower transmission line (8).

2. The split smart glasses for human-computer interaction according to claim 1, wherein the bone conduction microphones (3) are fixed in nose pads (9) of the smart glasses body (1); the glasses temple (5) of the smart glasses body (1) is provided with an electronic control unit (10) with a microprocessor; the bone conduction microphones (3) collect the amplitude-modulated audio electrical signal generated by the sound vibration of the nasal bones, and then communicatively couples it to the electronic control unit (10).

3. The split smart glasses for human-computer interaction according to claim 2, wherein the bone conduction microphone (3) is provided with a piezoelectric ceramic vibration sensor or/and a gyroscope acceleration vibration sensor.

4. The split smart glasses for human-computer interaction according to claim 3, wherein the air conduction earphone microphones (4) are piston type and arranged next to the user's ear behind the two glasses temples (5) of the smart glasses body (1), and are hung in the ear facing the user's ear vortex; the air conduction earphone microphone (4) is provided with a switch for selecting one of bone conduction and air conduction microphone touch sensing, and handle thereof is movably connected to the smart glasses body (1).

5. The split smart glasses for human-computer interaction according to claim 4, wherein the automatic magnetic connection device comprises an upper magnetic connector (11) and a lower magnetic connector (12); the upper magnetic connector (11) is connected to the glasses hanging cord (6) through the upper transmission line (7), and the lower transmission line (8) extends to the back of the user's neck to connect to the lower magnetic connector (12).

6. The split smart glasses for human-computer interaction according to claim 5, wherein the lower magnetic connector (12) is provided with a guide block (13); the guide block (13) keeps the lower magnetic connector (12) facing upward, and at the same time, the upper magnetic head is automatically attracted and guided by the lower magnetic connector (12) until they are correctly aligned and attracted to each other.

7. The split smart glasses for human-computer interaction according to claim 6, wherein the lower magnetic connector (12) is also provided with a fixing piece (14); the fixing piece (14) fixes the lower magnetic connector (12) on the user's collar or clothing at the nape of the neck; the fixing piece (14) is an elastic clip or Velcro.

8. The split smart glasses for human-computer interaction according to claim 7, wherein the upper transmission line (7) can be introduced into the hanging cord from one side of the glasses temple (5) in a single bundle or divided into two bundles and introduced into the hanging cord from both glasses temples (5).

9. The split smart glasses for human-computer interaction according to claim 8, wherein the wearable part (2) is a wearable computer host split part containing a battery or an external battery split part after the wearable computer host is separated.

10. The split smart glasses for human-computer interaction according to claim 9, wherein the outer surface of the wearable part (2) is provided with a magnetic charging transmitting coil (15) for wireless charging of the wearable computer host or other devices and sockets (16) for charging itself or other devices.
